# EUROPÄISCHE PATENTSCHRIFT

(11) **EP 1 036 643 B1**
(45) Veröffentlichungstag und Bekanntmachung des Hinweises auf die Patenterteilung: **04.09.2002**
(21) Anmeldenummer: 99105361.2
(22) Anmeldetag: 16.03.1999
(51) Int. Cl.: B29C 63/20, F16L 59/14

(54) **Verfahren zur Herstellung wärmegedämmter Rohrleitungen**
Method for producing heat-insulated pipelines
Procédé de fabrication de tuyauteries isolées thermiquement

(43) Veröffentlichungstag der Anmeldung: 20.09.2000
(73) Patentinhaber: Seebauer, Ludwig, 09618 Brand-Erbisdorf (DE)
(72) Erfinder: Seebauer, Ludwig, 09618 Brand-Erbisdorf (DE)

(56) Entgegenhaltungen:
- EP-A- 0 212 130
- WO-A-97/10943
- DE-B- 1 181 399
- GB-A- 1 279 904
- PATENT ABSTRACTS OF JAPAN vol. 011, no. 339 (M-639), 6. November 1987 (1987-11-06) & JP 62 121036 A (KUBOTA LTD), 2. Juni 1987 (1987-06-02)

## Beschreibung

Die Erfindung betrifft ein Verfahren zur Herstellung wärmegedämmter Rohrleitungen, bestehend aus einem Schutzrohr, einem Wärmedämmstoff und mindestens einem Mediumrohr.

Wärmegedämmte Rohrleitungen, insbesondere solche zur Verlegung im Erdreich, haben an Bedeutung gewonnen, weil die vermehrte Errichtung lokaler Wärmeverteilungsnetze eine kabelähnliche Rohrverlegung in einem Stück bevorzugt.

Rohrleitungen dieser Art sind beispielsweise aus der GB-A-1 279 904 bekannt.

Bei einem allgemein bekannten Verfahren zur Herstellung wärmegedämmter Rohrleitungen werden Reaktionskomponenten zur Bildung von Polyurethanschaum dosiert in den Ringspalt des Schutzrohres eingebracht. Der Vorteil dieses Verfahrens liegt in der Ausbildung eines sehr feinen Zellschaumes mit entsprechend guter Dämmeigenschaft. Weil diese Schaumerzeugung jedoch mit einer Aushärtung einhergeht, ist die Forderung nach Flexibilität nicht optimal erfüllbar und somit ist die Erdverlegung dieser Rohrleitungen, insbesondere unter Umgehung von Hindernissen, erschwert.

Ein anderes bekanntes Verfahren basiert auf der mehrlagigen, konzentrischen Umhüllung eines oder mehrerer Mediumrohre mit Schaumstreifen. Das einwandige Schutzrohr wird dabei unmittelbar und fortlaufend auf den Schaumstoffkern aufextrudiert. Bei sehr guter Flexibilität des Erzeugnisse ist diese Produktionspraxis als aufwendig anzusehen, weil jede Lage Schaum einzeln verschweißt werden muß und zudem die gleichzeitige Extrudierung des Schutzrohres leicht zu störenden Anhaftungen führt, die ihre Ursache in Schweiß-Überständen oder Unrundung des Schaumkernes haben und nicht vollständig vermeidbar sind. Somit können kleine Undichtigkeiten entstehen, die ausreichen, daß Wasser in das Schutzrohr eindringen kann und folglich die Dämmwirkung unerwünscht gemindert wird.

Die Aufgabe der Erfindung besteht dementsprechend darin, eine wärmegedämmte Rohrleitung zu schaffen, deren Schutzrohr ein hohes Maß an Schutzwirkung aufweist, die Dämmwirkung wählbar gestaltet sowie flexibel und vorteilhaft herstellbar ist.

Erfindungsgemäß wird diese Aufgabe durch das Verfahren nach Patentanspruch 1 gelöst. Zweckmäßige Weiterbildungen der Erfindung sind Gegenstand der abhängigen Ansprüche. Bei diesem Verfahren wird der Wärmedämmstoff in ein ausgewähltes, bereits bestehendes Schutzrohr eingezogen und dazu findet eine Druckkammer-Kolbeneinheit Verwendung, welche die kombinative Wirkung von Uberdruck dadurch nutzbar macht, daß beim Wärmedämmstoff eine Kontraktion bewirkt wird die ausreicht, einen ungehinderten Vorschub des Wärmedämmstoffes zu ermöglichen, der mit Hilfe der Kolbeneinheit ausgeführt wird.

Durch das erfindungsgemäße Verfahren können die Einzelkomponenten Mediumrohr, Wärmedämmstoff und Schutzrohr, die jeweils als Handelsware in großer Vielfalt verfügbar sind, vorteilhaft zu einer wärmegedämmten Rohrleitung kombiniert werden. Dabei ist die angestrebte Dämmwirkung wegen der großen Auswahl an Strukturschäumen einfach anzupassen und damit leicht definierbar. Die Flexibilität und Biegeleichtigkeit des Erzeugnisses wird nicht durch die Aushärtung, welche für Polyurethanschaum charakteristisch ist, unerwünscht herabgesetzt. Das Schutzrohr ist bezüglich seiner Beschaffenheit zweckgerecht auswählbar, und das erfindungsgemäße Verfahren beeinträchtigt die Schutzwirkung und insbesondere die Dichtheit nicht.

Ein Ausführungsbeispiel der Erfindung wird in der Abbildung dargestellt und anhand der Bezugszeichen erläutert.

Es zeigen:
Figur 1 - Schnittansicht einer Vorrichtung zur Durchführung des erfindungsgemäßen Verfahrens
Figur 2 - Schnittansicht eines Wärmedämmstoffes bei Umgebungsdruck
Figur 3 - Darstellung einer erfindungsgemäß hergestellten, wärmegedämmten Rohrleitung

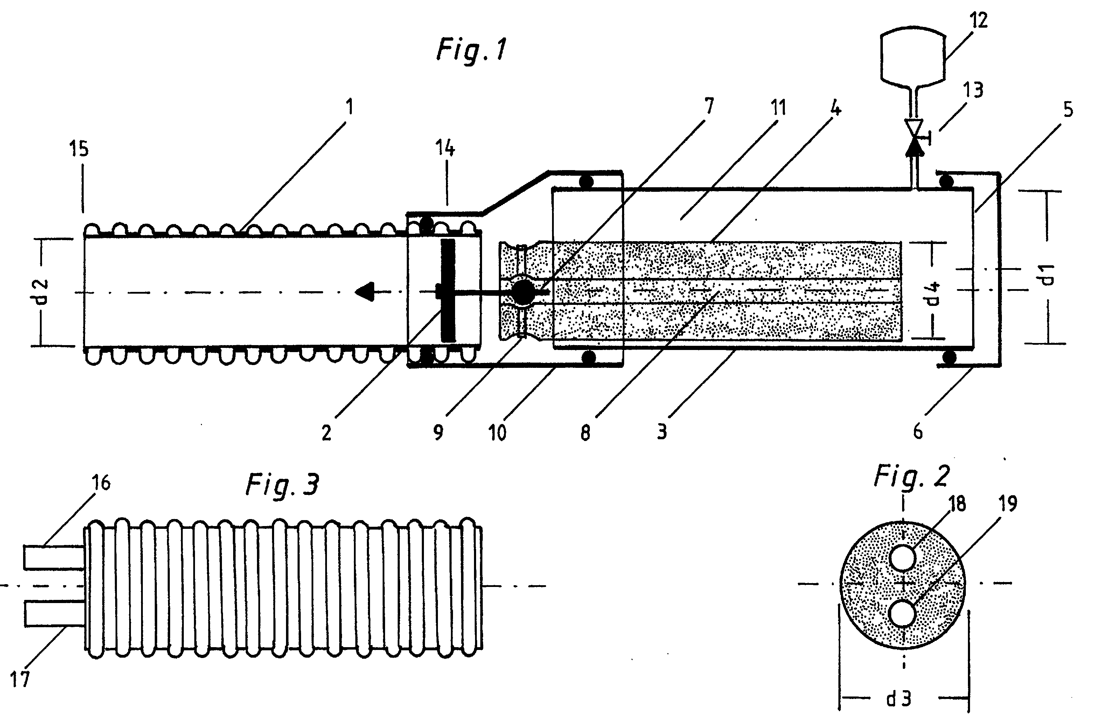

In der Schnittansicht von Figur 1 erkennt man ein Schutzrohr 1, das vorzugsweise aus hochdichtem Polyäthylen besteht, doppelwandig ist, eine außen gewellte und innen glatte Oberflächenstruktur aufweist und die Verwendung der verschiebbaren Kolbeneinheit 2 erleichtert.

Das Schutzrohr 1 kann auch aus mitteldichten oder hochdichten Kunststoff bestehen.

An das beschriebene Schutzrohr 1 schließt sich die Druckkammer 3 an, vorzugsweise als zylindrisches Rohr ausgebildet und einen inneren Durchmesser d1 aufweisend, der größer ist als der Durchmesser d3 des Wärmedämmstoffes bei Umgebungsdruck. Anstelle der zylindrischen Druckkammer 3 kann auch jede andere an sich bekannte und daher nicht dargestellte Bauform einer Druckkammer verwendet werden. In die dargestellte Druckkammer 3 ist der Wärmedämmstoff 4 über die Öffnung 5 einführbar und mit der Kappe 6 zu verschließen.

Die kraftschlüssige Verbindung zwischen Kolben-Einheit 2 und Wärmedämmstoff 4 wird durch Einführen der profilierten Kolbenstange 7 in die lochförmige Öffnung 8 des Wärmedämmstoffes 4 hergestellt und mittels Spannschloß 9 gesichert.

Als druckdichtes Verbindungselement zwischen Außenmantel-Schutzrohr 1 und Druckkammer 3 dient eine zweiteilige Reduziermuffe 10, die nach Einführen des Kolbens 2 angelegt und gegen Öffnen gesichert wird.

Der Einziehvorgang des Wärmedämmstoffes 4 wird eingeleitet, indem aus einem Druckspeicher 12 über ein Regelorgan 13 vorzugsweise Druckluft in den Zwischenraum 11 einströmt. Mit zunehmender Druckerhöhung auf vorzugsweise 0,6 bar Überdruck erfährt der Wärmedämmstoff 4 eine kontraktive Durchmesserreduktion von d3 auf d4 infolge Kompression. Weil d4 nunmehr kleiner als d2 ist, vollführt die Kolbeneinheit 2 eine ungehinderte Vorschubbewegung vom Startpunkt an Position 14 bis zum Austrittspunkt an Position 15. Beim Austritt findet selbttätig ein Druckausgleich zum Umgebungsdruck statt und bewirkt, daß sogleich eine Selbst-Rückverformung des Wärmedämmstoffes 4 einsetzt und sich ein vollflächiger, spaltfreier Kontakt zu benachbarten Innenseite des Schutzrohres 1 ausbildet.

In einem weiteren, unabhängigen Verfahrensschritt werden die Mediumrohre 16,17 durch vorgefertigte Öffnungen 18,19 in den Wärmedämmstoff 4 eingezogen oder eingeschoben.

Unter vorgenannten Bedingungen wurde gefunden, daß eine Herstellungslänge von 100 Meter unschwer erzielbar und damit die Markterfordernisse gut erfüllbar sind.

## Patentansprüche

1. Verfahren zur Herstellung wärmegedämmter Rohrleitungen, beinhaltend ein Schutzrohr (1), und in dieses einführbar eine Kolbeneinheit (2), sowie eine sich anschließende Druckkammer (3), die einen Wärmedämmstoff (4) enthält, und bei diesem unter Einwirkung stetigen Überdruckes eine Kontraktion bewirkt wird die ausreicht, einen ungehinderten Vorschub des Wärmedämmstoffes (4) im Schutzrohr (1) zu ermöglichen, der mit Hilfe der Kolbeneinheit (2) ausgeführt wird, und ein oder mehrere Medienrohre (16,17) in vorgefertigte Öffnungen (18,19) des Wärmedämmstoffes (4) einzuziehen oder einzuschieben sind, wobei das Schutzrohr (1) aus außen gewellter und innen glatter, oder außen und innen glatter Struktur ausgewählt ist.

2. Verfahren zu Herstellung wärmegedämmter Rohrleitungen nach Anspruch 1, wobei der Wärmedämmstoff(4) aus Polyäthylen, aus Kautschuk oder aus Polyurethan ausgewählt ist.

3. Verfahren zur Herstellung wärmegedämmter Rohrleitungen nach Anspruch 1 oder 2, wobei der Querschnitt des Schutzrohres (1) kreisrund, oval, vieleckig oder aus einer Kombination vorgenannter Formen ausgewählt ist.

## Claims

1. Method for producing heat-insulated pipelines, comprising a protective pipe (1), and, insertable in the latter, a plunger unit (2), and an adjoining pressure chamber (3), which contains a heat-insulating material (4), and when the latter is subjected to the effect of a constant positive pressure a contraction is brought about, sufficient to allow unhindered advancement of the heat-insulating material (4) in the protective pipe (1), which is performed with the aid of the plunger unit (2), and one or more media pipes (16, 17) are able to be pulled or pushed into prefabricated openings (18, 19) in the heat-insulating material (4), the protective pipe (1) being selected from an outwardly corrugated and inwardly smooth structure, or an outwardly and inwardly smooth structure.

2. Method for producing heat-insulated pipelines according to Claim 1, the heat-insulating material (4) being selected from polyethylene, rubber or polyurethane.

3. Method for producing heat-insulated pipelines according to Claim 1 or 2, the cross section of the protective pipe (1) being circular, oval, polygonal or selected from a combination of the aforementioned forms.

## Revendications

1. Procédé de fabrication de tuyauteries isolées thermiquement, comprenant un tube de protection (1), et une unité de piston (2) à introduire dans celui-ci ainsi qu'une chambre sous pression s'y raccordant (3), qui contient une matière d'isolation thermique (4), dans lequel on provoque dans celle-ci, sous l'action d'une surpression constante, une contraction qui suffit pour permettre une progression sans encombres de la matière d'isolation thermique (4) dans le tube de protection (1), qui est réalisée à l'aide de l'unité de piston (2), dans lequel un ou plusieurs tuyaux à fluide (16, 17) doivent être tirés ou poussés dans des ouvertures (18, 19) préfabriquées dans la matière d'isolation thermique (4), dans lequel le tube de protection (1) est sélectionné avec une structure extérieurement ondulée et intérieurement lisse, ou extérieurement et intérieurement lisse.

2. Procédé de fabrication de tuyauteries isolées thermiquement suivant la revendication 1, dans lequel la matière d'isolation thermique (4) est choisie parmi le polyéthylène, le caoutchouc ou le polyuréthanne.

3. Procédé de tuyauteries isolées thermiquement suivant la revendication 1 ou 2, dans lequel la section transversale du tube de protection (1) est circulaire, ovale, polygonale ou se compose d'une combinaison des formes précitées.
